# EUROPÄISCHE PATENTSCHRIFT

(11) **EP 1 027 297 B1**
(45) Veröffentlichungstag und Bekanntmachung des Hinweises auf die Patenterteilung: **07.08.2002**
(21) Anmeldenummer: 98950104.4
(22) Anmeldetag: 02.10.1998
(51) Int. Cl.: C03B 19/09, C03C 14/00, C04B 14/22, C04B 32/00

(54) **VERFAHREN ZUM HERSTELLEN VON SINTERGLAS- ODER SINTERGLASKERAMIK-FORMKÖRPERN ALS NATURSTEINÄHNLICHE BAU- UND DEKORATIONSMATERIALIEN**
METHOD FOR PRODUCING A FORMED BODY OF SINTERED GLASS OR SINTERED GLASS CERAMICS AS BUILDING AND DECORATION MATERIALS SIMILAR TO NATURAL STONE
PROCEDE DE PRODUCTION DE PLATTES A BASE DE VERRES FRITTES OU DE CERAMIQUES EN VERRE FRITTE COMME MATERIAUX DE CONSTRUCTION ET DE DECORATION

(30) Priorität: 11.10.1997 DE 19745045
(43) Veröffentlichungstag der Anmeldung: 16.08.2000
(73) Patentinhaber: Indupart Glaskeramik Stahl-und Metallbau GmbH, 06179 Teutschenthal (DE)
(72) Erfinder: GREULICH, Norbert, D-55127 Mainz (DE)
(74) Vertreter: Fuchs Mehler Weiss & Fritzsche
(86) Internationale Anmeldenummer: EP9806288
(87) Internationale Veröffentlichungsnummer: WO9919264

(56) Entgegenhaltungen:
- WO-A-91/03433
- DE-A- 3 116 677
- DE-C- 4 125 698
- DE-C- 4 319 808
- DE-C- 4 416 489
- DATABASE WPI Section Ch, Week 7405 Derwent Publications Ltd., London, GB; Class L02, AN 74-08925V XP002090094 & SU 383 692 A (EVSTROPEV K K ET AL) , 1. August 1973 -& SU 383 692 A
- DATABASE WPI Section Ch, Week 7717 Derwent Publications Ltd., London, GB; Class L01, AN 77-29847Y XP002090095 & JP 52 033909 A (DANTO KK), 15. März 1977

## Beschreibung

Die Erfindung betrifft ein Verfahren zum Herstellen von Sinterglas- oder Sinterglaskeramik-Formkörpern gemäß dem Oberbegriff des Anspruches 1.

Für dekorative Anwendungen im Innen- und Außenbereich sind zahlreiche natürliche Materialien im Einsatz. Breite Verwendung finden insbesondere Marmor und Granit, die in großen Mengen zur Innen- und Außenverkleidung von repräsentativen Gebäuden zur Anwendung kommen. Neben dem dekorativen Eindruck muß auch die Korrosionsbeständigkeit und eine wirtschaftliche Herstellung gewährleistet sein. Natürlich vorkommende Materialien genügen diesen Anforderungen nicht immer, da sich häufig nicht genügend große Flächen mit einheitlichem Eindruck herstellen lassen und da die Korrosionsbeständigkeit und die Festigkeit aufgrund der Porosität des natürlichen Materials nicht immer optimal ist.

Es ist daher bekannt, die natürlichen Materialien durch künstlich hergestellte natursteinähnliche plattenförmige Formkörper auf Glasbasis zu ersetzen.

So ist aus der DE-C1-41 25 698 ein glaskeramisches Material mit einer Zusammensetzung (in Gewichts-% auf Oxidbasis) von

| | |
|---|---|
| SiO₂ | 64.1-72 |
| Al₂O₃ | 2.9-11 |
| CaO | 15.0-26 |
| MgO | 0-8 |
| ZnO | 0≤2 |
| BaO | 0-0.5 |
| K₂O | 0-7.4 |
| Na₂O | 0-2 |
| F | 0.5-4 |

wobei ΣNa₂O, K₂O mindestens 2 beträgt, bekannt, das als Natursteinersatz für dekorative Anwendungen und zum Belegen von Fußböden und Verkleiden von Wänden und Fassaden in der Bauwirtschaft Verwendung findet.

Glaskeramik als Natursteinersatz bietet zwar ein gutes dekoratives Erscheinungsbild, ist aber z.B. auch wegen seines aufwendigen Keramisierungsprozesses aufwendig und teuer herzustellen. Des weiteren werden zur Herstellung relativ reine und damit wertvolle Rohstoffe benötigt.

Es ist daher durch die DE-C1-43 19 808 und die DE-C1-44 16 489 auch bekannt geworden, natursteinähnliche Formkörper der vorgenannten Art auf der Basis von Sinterglas oder Sinterglaskeramik herzustellen. Ausgangsprodukt dieser Sinter-Herstellungsverfahren ist gebrochenes Glas. Das gebrochene Glas kann dabei ein Glasgranulat aus Flachglas und/oder aus Hohlglas, z.B. von Flaschen oder Behältern, und deren Mischungen sein, wobei auch Altglas, Recyclingglas, z.B. von Bildschirmröhren, und Glasreste mitverwendet werden können. Aus einem derartigen Glasgranulat in Verbindung mit Zuschlagstoffen hergestellte Sinterglas- oder Sinterglaskeramik-Formkörper lassen sich daher kostengünstig und umweltfreundlich herstellen.

So beschreibt die DE-C1-43 19 808 ein Verfahren zur Herstellung von natursteinähnlichen, plattenförmigen Bau- und Dekorationsmaterialien hoher Festigkeit zur Verkleidung von Fassaden, Wänden und Böden im Innen- und Außenbereich, die aus geschichteten Einzellagen von gebrochenem Glas, Zuschlagstoffen, insbesondere Sand und deren Abmischungen bestehen. Bei diesem bekannten Verfahren wird in einer temperaturbeständigen Form zunächst aus geschichteten Einzellagen der Ausgangsstoffe ein verdichteter Lagenstapel aufgebaut, der anschließend einer aus mehreren aufeinanderfolgenden Verfahrensschritten bestehenden thermischen Behandlung unterworfen wird.

Die Herstellung der Formkörper nach diesem Verfahren ist wegen der Notwendigkeit, einen mehrschichtigen Lagenstapel aufzubauen und der daraus resultierenden umfangreichen thermischen Behandlung sehr aufwendig.

Die DE-C1-44 16 489 beschreibt dagegen ein weniger aufwendigeres Verfahren zur Herstellung von natursteinähnlichen, plattenförmigen Bau- und Dekorationsmaterialien hoher Festigkeit zur Verkleidung von Fassaden, Wänden und Böden im Innen- und Außenbereich, bei der das Ausgangsmaterial eine Abmischung von gebrochenem Glas, mineralischen Komponenten und feinteiligen Zusätzen besteht, wobei die Abmischung aus 85 - 98 Ma.-% gebrochenem Glas, 0 - 14,7 Ma.-% einer mineralischen Komponente und aus insgesamt 0,3 - 5 Ma.-% feinteiligen Zusätzen hergestellt wird. Diese Abmischung wird anschließend in einer einzigen ebenen, gleichmäßig dicken Lage in eine temperaturbeständige Form eingebracht, dort bei 60 - 110° C getrocknet, danach mit 0,5 - 3,0 K/min auf 720 - 1100° C aufgeheizt, wobei diese Temperatur 20 - 120 min gehalten wird. Danach wird die Lage mit 0,5 - 3,0 K/min auf Raumtemperatur abgekühlt.

Durch die vorgenannte Zusammensetzung der Abmischung und die angegebene Temperaturführung gelingt es, daß die Formkörper
- nicht mit der Produktionsform reagieren
- sich keine Unebenheiten auf der Plattenoberfläche ergeben
- die Platten nicht deformieren
- sich keine Blasen, Poren, Einschlüsse und/oder Mikrorisse in der Deckschicht ausbilden
- keine Schleif- und Polierarbeiten anfallen, und
- hohe Biegezugfestigkeit aufweisen.

Die Vorteile der Bau- und Dekorationsmaterialien, die nach dem bekannten Verfahren hergestellt werden, sind:
1. Die Biegezugfestigkeit beträgt mindestens 14 - 18 MPa, bei Verwendung von ZrO₂ sogar 19 - 23 MPa.
2. Keine Mikrorisse an der Oberfläche, so daß eine Fleckenbeständigkeit nach DIN EN 122 von Klasse 1 erreicht wird.
3. Das Aussehen von verschiedenen Platten ist einheitlicher und damit reproduzierbarer als von Platten, die ohne die feinteiligen Zusätze gefertigt werden, die trotz unveränderter Fertigungsparameter häufig völlig verschiedenartiges Aussehen aufweisen.
4. Die "Anmutung" der Plattenoberfläche wirkt weitaus lebendiger und ähnelt stark bestimmten natürlichen Gesteinssorten, z.B. Granit.
5. Die Materialoberflächen sind farblich und strukturell frei gestaltbar.
6. Ein eigenständiges, geschmackvolles Aussehen ist reproduzierbar.
7. Das Material weist im Inneren sehr wenige Blasen auf (bei einer evtl. Oberflächenpolitur würden ansonsten Blasen störend in Erscheinung treten).
8. Die Verwendung von Recyclinggläsern schont die Natursteinvorräte und macht so das vorstehende Verfahren auch ökologisch interessant.

Die nach dem bekannten Verfahren hergestellten natursteinähnlichen Bau- und Dekorationsmaterialien sind sehr haltbar und haben eine lange Lebensdauer. Sie finden Anwendung für Verkleidungen von Außen- und Innenwänden von Objekten des Industrie-, Wohnungs- und Verkehrs-Bauwesens, für Möbel, Arbeitsplatten in Küchen und Labors und für dekorative Kunstwerke. Die Materialien zeichnen sich durch eine hohe Festigkeit und Härte aus. Das Material ist hygienisch, leicht zu reinigen, hoch temperaturfest, chemisch beständig, elektrisch nicht leitend und nicht brennbar. Damit sind die so hergestellten künstlichen Bau- und Dekorationsmaterialien besser als natürliche, teure Materialien, wie z.B. Granit, Marmor oder Travertin.

Von diesem bekannten Verfahren nach der DE-C1-44 16 489 geht die Erfindung aus.

Der Erfindung liegt die Aufgabe zugrunde, nach diesem Verfahren Sinterglasoder Sinterglaskeramikplatten herzustellen mit einer optisch wirksamen Oberflächenqualität, wie sie ansonsten nur in wirtschaftlich und technisch aufwendigen Schleif- und Poliervorgängen zu erzeugen ist. Eine weitere Aufgabe liegt in der Absenkung der Maximaltemperatur für den Sintervorgang.

Die Lösung dieser Aufgabe gelingt gemäß der Erfindung dadurch, daß ausgehend von dem eingangs bezeichneten Verfahren den Abmischungen ein Sinterhilfsmittel in Form einer Lösung einer Metall-Tetrachloridverbindung, eines Metalloxichlorides, eines Metallalkoholates oder eines Hydrolyseproduktes davon mit einem Anteil am Gesamtversatz im Bereich von 40-600 ppm zugesetzt wird.

Bei der Erfindung erfolgt daher ein Zusetzen des Sinterhilfsmittels in Form einer Lösung vor dem Sintern, wodurch eine sehr feine Verteilung des Sinterhilfsmittels erreicht wird. Diese Maßnahme nach der Erfindung hat die überraschende Wirkung, daß sich die Sintertemperatur durch den Einsatz von gelösten vorgenannten Verbindungen in bereits geringen Mengen um bis zu 130 K senken läßt, was mit Vorteil zu Energieeinsparungen führt und damit den Gesamtprozeß technisch vereinfacht und wirtschaftlicher werden läßt. Dabei bleiben die Gebrauchseigenschaften, wie z.B. die Festigkeit, unverändert oder werden sogar verbessert, was die Oberflächenqualität und die Möglichkeit zum Umformen und Biegen der plattenförmigen Formkörper anbelangt. So hat sich z.B. herausgestellt, daß sich Platten aus Sinterglaskeramik, die z.B. mit Hilfe von einem Tetrachlorid-Zusatz hergestellt wurden, im Gegensatz zu Platten, die ohne diesen Zusatz hergestellt wurden, mit großem Vorteil problemlos bei 700° C verformen, insbesondere biegen lassen.

Die vorgenannten Zusätze verursachen ferner eine Zunahme der Sinteraktivität des verwendeten Glasgranulates. Indikator hierfür ist ein verbessertes Glattfließen des Glases, was sich in einer Erhöhung des Glanzes und Verbesserung der Ebenheit der hergestellten Plattenoberflächen äußert. Dies wirkt sich nach den bisherigen Versuchen soweit aus, daß auch gröberes Glasgranulat mit Kornobergrenzen bis zu 10 mm (bisheriges Standard-Granulat: < 5 mm) ohne Einbuße an Biegezugfestigkeit für die Herstellung nach dem erfindungsgemäßen Verfahren verwendet werden können.

Es hat sich gezeigt, daß verschiedene Metall-Tetrachloridverbindungen, oder Metalloxichloride oder Metallalkoholate bzw. die Hydrolyseprodukte davon, verwendet werden können. Dabei nehmen die Verbindungen mit Metallen der 4. und 5. Nebengruppe des Periodensystems sowie mit Zinn einen besonderen Platz ein, wie Tetrachlorid-Verbindungen oder Oxichloride bzw. Alkoholate des Zinns, des Vanadiums oder des Zirkoniums, oder Hydrolyseprodukte davon.

Vorzugsweise findet Titantetrachlorid (TiCl₄) Anwendung, weil sich, wie Versuche gezeigt haben, mit dieser Verbindung ein sehr ausgeprägter Effekt ergibt.

Grundsätzlich kann die Lösung eine wässrige Lösung sein. Es hat sich jedoch gezeigt, daß die vorgenannten Zusätze als Sinterhilfsmittel, insbesondere das Titantetrachlorid, besonders wirksam sind, wenn sie in gelöster Form mit Ethanol bzw. anderen Alkoholen zugesetzt werden.

Lösung in diesem Sinne umfaßt auch eine Suspension sowie ein kolloidales System.

Die Metallalkoholate können als Substanz in Lösung gegeben werden. Sie können auch durch eine Reaktion des Metalls in alkoholischer Lösung erst in dieser gebildet werden.

Der Anteil der Zusätze am Gesamtversatz liegt im Bereich von 40-600 ppm. Beispielsweise bereits bei einem geringen Tetrachlorid-Zusatz im Bereich von 80-250 ppm, bevorzugt bei 160 ppm, ist eine deutliche Absenkung der maximal notwendigen Sintertemperatur festzustellen. Die Sintertemperatur für großformatige Platten kann von 990° C ohne Einbuße der Materialfestigkeit auf 900° C gesenkt werden.

Der Glanz und die Ebenheit der Oberfläche der so hergestellten Platten kommen nahe an polierte Qualitäten heran.

Eine sichtbare Wirkung tritt bereits bei TiCl₄-Zusatz von 160 ppm ein, wobei das TiCl₄ vorteilhaft in gelöster Form eingebracht wird.

Durch Zusätze, insbesondere Tetrachlorid-Zusätze > 400 ppm, lassen sich Platten mit vollkommen ebener, jedoch mattierter Oberfläche herstellen, die sonst nur über einen weiteren Verfahrensschritt wie Sandstrahlen oder Schleifen erreichbar sind.

Das vorerwähnte Glattfließen von gesinterten Gläsern wird durch die entsprechenden Dioxide der vorgenannten Zusätze erzeugt, die durch die Zersetzung der zugesetzten Verbindungen, insbesondere der Tetrachloride, ggf. bei der Sintertemperatur entsteht. Dabei kommt es offensichtlich nur darauf an, daß das entstehende Dioxid hinreichend feinteilig und gleichmäßig auf der Oberfläche der Glasgranulatkörner verteilt wird, was über den Umweg der Auflösung der Zusätze in einem geeigneten Lösungsmittel geschieht. Besonders ausgeprägt ist der Effekt bei TiO₂, das aus wie auch immer gelösten Komponenten entstanden ist. Wird das TiCl₄ z.B. in Wasser gelöst, wird TiO₂ abgespaltet und zugleich fein verteilt. Wird es in Alkohol gelöst, wird es fein verteilt und erst durch das Sintern gespalten.

Die vorstehend aufgeführten Tetrachloride des Zinns, Vanadiums, Zirkoniums und des Titans lassen sich im Grunde genommen in Wasser nicht lösen, da sie sofort hydrolysieren. Diese Hydrolyse erfolgt auch in einem Alkohol/Wasser-Gemisch. Bei der Hydrolyse von TiCI₄ beispielsweise findet die Bildung einer wasserhaltigen Verbindung TiO₂.H₂O (früher auch als Metatitansäure, H₂TiO₃, bezeichnet) statt. Nach dem derzeitigen Erkenntnisstand stellen generell teilhydrolysierte oder gänzlich hydrolisierte Reaktionsprodukte aus der Reaktion der Halogenverbindungen der Zusätze die eigentlich wirksame Substanz für den beschriebenen Effekt dar. Daher können auch andere ähnlich wie Alkohol bzw. Wasser hydrolysierende Verbindungen, z.B. Titanoxidsulfat Ti0 (S0₄) - früher Titanylsulfat genannt - verwendet werden. Es eignen sich daher auch Lösungen, die aus der Reaktion von Wasser mit titanorganischen Verbindungen des allgemeinen Typs - Ti (OR)₄ - gebildet werden. Diese Titanalkoxide mit Alkylresten von bis zu etwa vier Kohlenstoffatomen hydrolysieren ebenfalls mehr oder weniger schnell, zunächst unter Bildung von Oligomeren, zu dem Endprodukt TiO₂, dem, wie beschrieben, eine besondere Bedeutung beikommt. Derartige Titanalkoxide, d.h. Titanalkolate oder entsprechend halogenierte Titanalkoxide der allgemeinen Formel Ti(OR)ₙ xₘ mit X=Halogen und m ≤ n, sind daher ebenfalls geeignet.

In der vorgenannten DE-C-44 16 489 werden zwar ebenfalls SnO bzw. TiO₂ als feinteilige Zusätze beschrieben, jedoch werden diese nicht in gelöster, d.h. imprägnierbarer Form, zugegeben und können daher nicht als Sinterhilfsmittel im Sinne der Erfindung wirken. Denn dazu muß das Sinterhilfsmittel sehr fein verteilt sein, was nicht durch eine pulverförmige Zugabe, sondern nur dadurch gewährleistet werden kann, wenn es in gelöster oder wenigstens in kolloidaler gelöster Form der Abmischung in einem vorgegebenen Mengenbereich zugesetzt wird.

In der SU-A-383 692 wird ein Verfahren zum Herstellen eines Sinterglas-Erzeugnisses beschrieben, bei dem das ungesinterte Erzeugnis vor dem Trocknen und Sintern bei 1000-1150° C für 1-2 Stunden einer Behandlung mit einer Metalllchlorid-, insbesondere einer Titanchlorid-Lösung ausgesetzt wird. Dabei geht es allein um die Erhöhung der thermischen, mechanischen und chemischen Stärke des Sinterproduktes. Hinweise auf die erfindungsgemäßen Effekte sind nicht gegeben.

Die Wirkung des erfindungsgemäßen Zusatzes besteht in einer sehr viel besseren Ebenheit der Plattenoberfläche, verbunden mit einem deutlich verbesserten Glanz. Dadurch wird prinzipiell die Verwendung von Glasgranulat mit Kornobergrenzen bis zu mindestens 10 mm ermöglicht, welches anderenfalls zu Oberflächen mit zu starken Unebenheiten und damit zu Problemen für das Schleifen und Polieren führen würde.

Bei hohem Tetrachlorid-Zusatz (> 400 ppm) lagern sich offenbar zu viele Oxidpartikel in der Oberfläche der Granulatkörner ab, die die Sinteraktivität und damit den Glanz wieder beeinträchtigen. Die Plattenoberfläche wird rauher; ihre verbesserte Ebenheit bleibt jedoch erhalten. Die Plattenoberflächen haben dann die Anmutung eines geschliffenen oder sandgestrahlten Materials.

Die Herstellung der erfindungsgemäßen Sinterglas- oder SinterglaskeramikPlatten erfolgt entsprechend den in der DE-C-44 16 489 beschriebenen Verfahrensschritten und den dort beschriebenen Beispielen.

Nach der Bereitstellung der in den temperaturbeständigen Formen vergleichmäßigten und verfestigten Abmischungen unter dem erfindungsgemäßen Zusatz einer ethanolischen Tetrachlorid-Lösung als Sinterhilfsmittel beginnt die thermische Behandlung mit der Trocknung in der Form bei Temperaturen zwischen 60 - 110° C. Darauf folgen die in der Keramik- und Glasindustrie an sich bekannten und üblichen Verfahrensschritte des Sinterns, die in der vorgenannten DE-Schrift in den Verfahrensschritten 1.3 - 1.5 dargestellt werden, und die auch zum Inhalt der vorliegenden Anmeldung gemacht werden. Allerdings kann durch die erfindungsgemäße Maßnahme die maximale Sintertemperatur von 990 K um bis zu 130 K gesenkt werden, was die eingangs beschriebenen Vorteile mit sich bringt.

Soweit in der vorgenannten DE-Schrift Angaben über die Zusammensetzung von Gläsern, der Körnung des Glasgranulates, der mineralischen Zusatzkomponenten und der feinteiligen Zusätze gemacht werden, werden diese Angaben zum Offenbarungsinhalt der vorliegenden Anmeldung gemacht.

**Tabelle 1**

| Tₘₐₓ | | TiO₂-Gehalt [ppm] | | | | | | |
|---|---|---|---|---|---|---|---|---|
| [°C] | | 0 | 35 | 70 | 110 | 140 | 180 | 210 |
| 860 | Oberfläche | -- | glatt, eben | glatt, eben | glatt, eben | leicht rauh, eben | leicht rauh, eben | leicht rauh, eben |
| | Glanz | -- | seidenmatt | seidenmatt | seidenmatt | matt-seidenmatt | matt-seidenmatt | matt-seidenmatt |
| 880 | Oberfäche | glatt, geriffelt | glatt, eben | leicht rauh, eben | glatt, eben | glatt, eben | glatt, eben | leicht rauh, eben |
| | Glanz | seidenmatt | seidenmatt | seidenmatt | seidenmatt | seidenmatt | seidenmatt | seidenmatt |
| 900 | Oberfläche | glatt, geriffelt | glatt, eben | glatt, eben | glatt, eben | glatt, eben | glatt, eben | glatt, eben |
| | Glanz | seidenmatt | glänzend-seidenmatt | glänzend | glänzend-seidenmatt | glänzend-seidenmatt | glänzend-seidenmatt | glänzend-seidenmatt |

**Tabelle 2**

| | Platte mit 70 ppm TiO₂ Granulat < 5 mm Format 1200 x 900 mm | Platte mit 70 ppm TiO₂ Granulat < 10 mm Format 300 x 300 mm | Platte ohne TiO₂ |
|---|---|---|---|
| Charakt. Wert [MPa] | 38 | 40 | 41 |
| Weibull-Modul | 13 | 12 | 5 |
| 5%-Fraktil [MPa] | 30 | 31 | 30 |
| Probenzahl | 6 | 8 | 10 |

Anhand der in den Tabellen 1 und 2 dargestellten Ergebnisse von Labormustern sollen bestimmte Eigenschaften der nach dem erfindungsgemäßen Verfahren hergestellten Sinterplatten vergleichend dargestellt werden.

In der Tabelle 1 sind die Versuchsergebnisse zur Optimierung der Oberflächen der nach dem Verfahren gemäß der Ausführungsform der Erfindung mit der Titantetrachlorid-Lösung als Sinterhilfsmittel hergestellten Sinterplatten vergleichend zusammengestellt. Dabei sind für drei maximale Sintertemperaturen Tmax die dem zugesetzten Titantetraclorid äquivalenten Mengen an Titandioxid, das während des Sinterns aus Titantetraclorid entsteht, angegeben.

Die Tabelle zeigt dabei, daß bereits bei der relativ niedrigen maximalen Sintertemperatur von 860° C bei einem Titandioxidgehalt von 35-110 ppm eine glatte, ebene und seidenmatt glänzende Platte erhältlich ist, wobei bei der höheren Sintertemperatur von 900° C die Oberfläche glänzend-seidenmatt erscheint. Ein Gehalt an Titandioxid von 70 ppm entspricht dabei einem Gehalt an Titantetrachlorid von 160 ppm.

Die Tabelle 2 zeigt den Vergleich der Biegezugfestigkeiten einer nach dem vorgenannten erfindungsgemäßen Verfahren hergestellten Sinterplatte mit und ohne Zusatz von 160 ppm Titantetrachlorid bzw. 70 ppm Titandioxid.

Die untersuchte Sinterplatte wurde im Herdwagenofen bei einer maximalen Sintertemperatur von 900° C mit einer Haltezeit von 60 Minuten bei dieser Temperatur hergestellt. Die Ebenheit und der Glanz der Oberfläche war gegenüber einer unter sonst gleichen Parametern, jedoch bei Tmax = 990° C mit einer Haltezeit von 120 Minuten hergestellten Platte wesentlich verbessert. Der Vergleich der Weibull-Auswertung für die Biegezugfestigkeit zeigt im Rahmen der Meßgenauigkeit keine Veränderung gegenüber dem Referenzmuster, wie die vergleichende Betrachtung nach der Tabelle 2 zeigt, die im übrigen Angaben bei zwei unterschiedlichen Granulatkörnungen bei unterschiedlichen Formatgrößen der Platte aufweist.

Die vorgenannte Tabelle 2 zeigt insbesondere, daß auch bei abgesenkter maximaler Sintertemperatur und einer um die Hälfte verkürzten Haltezeit durch das Verfahren nach der Erfindung die mechanischen Werte erhalten bleiben.

## Patentansprüche

1. Verfahren zum Herstellen von Sinterglas- oder Sinterglaskeramik-Formkörpern als natursteinähnliche Bau- und Dekorationsmaterialien hoher Festigkeit zur Verkleidung von Fassaden, Wänden und Böden im Innen- und Außenbereich aus Abmischungen von 85 - 98 Ma.-% gebrochenem Glas, 0 - 14,7 Ma.-% einer mineralischen Komponente und aus insgesamt 0,3 - 5 Ma.-% feinteiligen Zusätzen, mit den Verfahrensschritten
- Einbringen einer ebenen, gleichmäßig dicken Lage der Abmischung in eine temperaturbeständige Form
- Trocknen in der Form bei 60 - 100° C
- Aufheizen der Lage mit mindestens 0,5 - 3,0 K/min auf Sintertemperatur
- Halten dieser Temperatur für mindestens 20 Minuten
- Abkühlen der Lage mit mindestens 0,5 - 3,0 K/min auf Raumtemperatur
**dadurch gekennzeichnet,**
**daß** den Abmischungen ein Sinterhilfsmittel in Form einer Lösung einer Metall-Tetrachloridverbindung, eines Metalloxichlorides, eines Metallalkoholates oder eines Hydrolyseproduktes davon mit einem Anteil am Gesamtversatz im Bereich von 40-600 ppm, zugesetzt wird.

2. Verfahren nach Anspruch 1, **dadurch gekennzeichnet, daß** die Metall-Tetrachloridverbindung, das Metalloxichlorid, das Metallalkoholat oder ihr Hydrolyseprodukt aus Metallen der 4. und 5. Nebengruppe des periodischen Systems der chemischen Elemente sowie Zinn gebildet ist.

3. Verfahren nach Anspruch 2, **dadurch gekennzeichnet, daß** Metall-Tetrachlorid-Verbindungen oder Oxichloride oder Alkoholate des Zinns oder des Vanadiums oder des Zirkoniums oder, bevorzugt, des Titans, oder Hydrolyseproduktes davon verwendet werden.

4. Verfahren nach einem der Ansprüche 1 bis 3, **dadurch gekennzeichnet, daß** die Lösung eine wässrige oder alkoholische, vorzugsweise eine ethanolische Lösung ist.

5. Verfahren nach einem der Ansprüche 1 bis 4, **dadurch gekennzeichnet, daß** die Kornobergrenze des verwendeten Glasgranulates vorzugsweise bei 10 mm liegt.

## Claims

1. Process for producing shaped sintered glass or sintered glass ceramic bodies as high-strength construction and decoration materials which resemble natural stone and are used for cladding facades, walls and floors, both indoors and outdoors, from mixtures comprising 85 - 98% by mass of broken glass, 0 - 14.7% by mass of a mineral component and a total of 0.3 - 5% by mass of finely divided additives, comprising the process steps of
- introducing a planar, uniformly thick layer of the mixture into a heat-resistant mould
- drying in the mould at 60 - 100°C
- heating the layer at a rate of at least 0.5 - 3.0 K/min to the sintering temperature
- holding this temperature for at least 20 minutes
- cooling the layer at a rate of at least 0.5 - 3.0 K/min to room temperature
**characterized**
**in that** a sintering aid, in the form of a solution of a metal tetrachloride compound, a metal oxychloride, a metal alkoxide or a hydrolysis product thereof, forming a proportion of the complete batch which lies within the range of 40 - 600 ppm is added to the mixtures.

2. Process according to Claim 1, **characterized in that** the metal tetrachloride compound, the metal oxychloride, the metal alkoxide or the hydrolysis product thereof is formed from metals from sub-group 4 or 5 of the periodic system of elements or from tin.

3. Process according to Claim 2, **characterized in that** metal tetrachloride compounds or oxychlorides or alkoxides of tin or of vanadium or of zirconium or, preferably, of titanium, or hydrolysis products thereof, are preferably used.

4. Process according to one of Claims 1 to 3, **characterized in that** the solution is an aqueous or alcoholic solution, preferably an ethanolic solution.

5. Process according to one of Claims 1 to 4, **characterized in that** the grain size upper limit of the glass granules used is preferably in the vicinity of 10 mm.

## Revendications

1. Procédé pour la fabrication de corps façonnés en verre fritté ou en céramique de verre fritté en tant que matériaux de construction et de décoration analogues à la pierre naturelle, de résistance élevée, pour le revêtement de façades, de parois et de sols, à l'intérieur et à l'extérieur, à partir de mélanges constitués de 85 à 98% en masse de verre brisé, de 0 à 14,7% en masse d'un composant minéral et d'au total 0,3 à 5% en masse d'additifs finement divisés, comprenant les étapes de procédé
- introduction d'une couche plane d'épaisseur régulière du mélange dans un moule résistant à la température,
- séchage dans le moule à 60 jusqu'à 100°C,
- chauffage de la couche à au moins 0,5 à 3,0 K/min jusqu'à la température de frittage,
- maintien de cette température pendant au moins 20 minutes
- refroidissement de la couche à au moins 0,5 à 3,0 K/min jusqu'à la température ambiante,
**caractérisé en ce qu'**on ajoute aux mélanges un adjuvant de frittage sous forme d'une solution d'un composé tétrachlorure de métal, d'un oxychlorure de métal, d'un alcoolate de métal ou d'un produit d'hydrolyse de celui-ci avec une proportion dans la plage de 40 à 600 ppm par rapport au mélange total.

2. Procédé selon la revendication 1, **caractérisé en ce que** le composé tétrachloxure de métal, l'oxychlorure de métal, l'alcoolate de métal ou son produit d'hydrolyse est formé à partir de métaux du 4ème et du 5ème groupe secondaire du système périodique des éléments chimiques ainsi que d'étain.

3. Procédé selon la revendication 2, **caractérisé en ce qu'**on utilise des composés tétrachloruze de métal ou des oxychlorures ou des alcoolates de l'étain ou du vanadium ou du zirconium ou, de préférence, du titane ou des produits d'hydrolyse de ceux-ci.

4. Procédé selon l'une quelconque des revendications 1 à 3, **caractérisé en ce que** la solution est une solution aqueuse ou alcoolique, de préférence une solution éthanolique.

5. Procédé selon l'une quelconque des revendications 1 à 4, **caractérisé en ce que** la limite supérieure des granules du granulat de verre utilisé est de préférence située à 10 mm.
